# EUROPEAN PATENT APPLICATION

(11) **EP 4 350 470 A1**
(43) Date of publication of application: **10.04.2024**
(21) Application number: 22214733.2
(22) Date of filing: 19.12.2022
(51) Int. Cl.: G06F 1/16, F16M 13/00, F16M 13/04

(54) **ACCESSORY FOR HANDHELD DEVICE**

(30) Priority: 07.10.2022 TW 111138178
(71) Applicant: Evolutive Labs Co., Ltd., Taipei City 11573 (TW)
(72) Inventor: HO, Cheng-Che, Taichung City (TW); LU, Jui-Chen, Taichung City (TW)
(74) Representative: Haseltine Lake Kempner LLP

(57) **Abstract**

An accessory for a handheld device is provided, including a first base, a second base, a first connecting member, a second connecting member, and a latch. The first and second connecting members connect the first base to the second base, wherein the first connecting member is provided with a first recess. The latch is movably disposed on the second base and detachably engaged in the first recess.

## Description

### CROSS REFERENCE TO RELATED APPLICATIONS

This Application claims priority of Taiwan Patent Application No. 111138178, filed on October 7, 2022, the entirety of which is incorporated by reference herein.

### BACKGROUND OF THE INVENTION

### Field of the Invention

The present invention relates to a handheld device, and, in particular, to an accessory for a handheld device.

### Description of the Related Art

Conventional cell phones and tablet computers usually have such functions as video recording and video conferencing. However, it would be uncomfortable for users to have to hold their cell phone when watching video for a long time.

To address this problem, various kinds of stands for supporting cell phones have appeared on the market. These stands can be attached to the rear of the cell phone. They can usually be opened and closed. When the stand is in the open state, a leg or some other protrusion may extend outwardly from the cell phone, so that the cell phone can stand upright on a flat surface stably.

During usage, such conventional stands may easily retract from the open position to the closed position when the user inadvertently touches the cell phone (or when struck by an external force), and this may result in the cell phone falling and cause an inconvenience to the user.

For the reasons described above, it has become a challenge to develop an accessory that can easily be used for supporting a handheld device on a table or similar surface.

### BRIEF SUMMARY OF THE INVENTION

An embodiment of the present invention provides an accessory for a handheld device. The accessory for a handheld device includes a first base, a second base, a first connecting member, a second connecting member, and a latch. The first connecting member is connected to the first base and slidably disposed on the second base, wherein the first connecting member is provided with a first recess. The second connecting member is connected to the first base and slidably disposed on the second base. The latch is movably disposed on the second base

When the accessory is in an open state, the first and second bases are spaced apart from each other along a first axis, and the latch can be detachably engaged in the first recess. The first connecting member is restricted from moving relative to the second base when the latch is engaged in the first recess.

In some embodiments, the first connecting member is further provided with a second recess, and when the accessory is switched from the open state to a closed state, the latch can be detachably engaged in the second recess.

In some embodiments, the latch is movable relative to the second base along a second axis that is perpendicular to the first axis.

In some embodiments, the first connecting member is further provided with a first rail that communicates with the first and second recesses, and the first and second recesses are located on the same side of the first rail, wherein when the accessory is switched between the open state and the closed state, the latch slides along the first rail and can be detachably engaged in the first recess or the second recess.

In some embodiments, the second connecting member is provided with a third recess, and when the accessory is in the open state, the latch can be detachably engaged in the third recess.

In some embodiments, the second connecting member is further provided with a fourth recess, and when the accessory is in the closed state, the latch can be detachably engaged in the fourth recess.

In some embodiments, the latch is movable relative to the second base along a second axis that is perpendicular to the first axis.

In some embodiments, the second connecting member is further provided with a second rail that communicates with the third and fourth recesses, and the third and fourth recesses are located on the same side of the second rail, wherein when the accessory is switched between the open state and the closed state, the latch slides along the second rail and can be detachably engaged in the third recess or the fourth recess.

In some embodiments, the latch is disposed on the bottom side of the second base, and the latch is provided with a protrusion extending toward the first base.

In some embodiments, the latch protrudes from the second base in a direction that is parallel to the second axis.

In some embodiments, the second base is provided with a first cavity and a second cavity that communicate with each other, and the latch is located between the first and second cavities.

In some embodiments, the latch is further provided with a rough surface facing the first base.

In some embodiments, the second base has a baffle between the first and second cavities, and the latch is received in a slot formed on the baffle.

In some embodiments, the latch is further provided with a rough surface facing the first base.

In some embodiments, the first and second recesses are formed at the edge of the first connecting member.

In some embodiments, the second base is further provided with a protrusion, and the first connecting member is further provided with a first rail, wherein when the accessory is switched from the open state to the closed state, the protrusion slides along the first rail.

In some embodiments, the first and second recesses are spaced apart from the first rail.

In some embodiments, the first and second connecting members have flexible material.

Another embodiment of the invention further provides an accessory for a handheld device. The accessory includes a first base, a second base pivotally connected to the first base, a first connecting member, and a latch. The first connecting member is connected to the first base and slidably disposed on the second base, wherein the first connecting member is provided with a first recess. The latch is movably disposed on the second base.

When the accessory is in an open state, the first base is angled relative to the second base, and the latch can be detachably engaged in the first recess. The first connecting member is restricted from moving relative to the second base when the latch is engaged in the first recess.

### BRIEF DESCRIPTION OF THE DRAWINGS

The present invention can be more fully understood by reading the subsequent detailed description and examples with references made to the accompanying drawings, wherein:
FIG. 1 is a perspective diagram of a handheld device 200 and its accessory 100 disposed on the handheld device 200, in accordance with an embodiment of the invention.
FIG. 2 is a perspective diagram of the accessory 100 on the rear side of the handheld device 200 when in the open state.
FIG. 3 is a perspective diagram of the accessory 100 in FIGs. 1 and 2 when in the open state.
FIG. 4 is another perspective diagram of the accessory 100 in FIGs. 1 and 2 when in the open state.
FIG. 5 is an exploded diagram of the accessory 100 in FIGs. 3 and 4.
FIG. 6 is another exploded diagram of the accessory 100 in FIGs. 3 and 4.
FIG. 7 is a cross-sectional view of the accessory 100 when in the open state.
FIG. 8A is another cross-sectional view of the accessory 100 when in the open state.
FIG. 8B is a perspective diagram of the accessory 100 when in an inclined state.
FIG. 9 is a perspective diagram of an accessory 100 when in the open state, in accordance with another embodiment of the invention.
FIG. 10 is another perspective diagram of the accessory 100 in FIG. 9.
FIG. 11 is an exploded diagram of the accessory 100 in FIGs. 9 and 10.
FIG. 12 is another exploded diagram of the accessory 100 in FIGs. 9 and 10.
FIG. 13 is a cross-sectional view of the accessory 100 in FIG. 9.
FIG. 14 is another cross-sectional view of the accessory 100 in FIG. 9.
FIG. 15 is a perspective diagram of an accessory 100 when in the open state, in accordance with another embodiment of the invention.
FIG. 16 is another perspective diagram of the accessory 100 in FIG. 15.
FIG. 17 is an exploded diagram of the accessory 100 in FIGs. 15 and 16.
FIG. 18 is another exploded diagram of the accessory 100 in FIGs. 15 and 16.
FIG. 19 is a cross-sectional view of the accessory 100 in FIG. 15.
FIG. 20 is another cross-sectional view of the accessory 100 in FIG. 15.
FIG. 21 is a perspective diagram of an accessory 100 when in the open state, in accordance with another embodiment of the invention.
FIG. 22 is another perspective diagram of the accessory 100 in FIG. 21.
FIG. 23 is an exploded diagram of the accessory 100 in FIGs. 21 and 22.
FIG. 24 is another exploded diagram of the accessory 100 in FIGs. 21 and 22.
FIG. 25 is a cross-sectional view of the accessory 100 in FIG. 21.
FIG. 26 is another cross-sectional view of the accessory 100 in FIG. 21.
FIG. 27 is a cross-sectional view showing the protrusion 51 of the latch 50 when engaged in the first recess 31 and the third recess 41.
FIG. 28 is a cross-sectional view showing the protrusion 51 of the latch 50 when engaged in the second recess 32 and the fourth recess 42.
FIG. 29 is a perspective diagram of an accessory 100 when in the open state, in accordance with another embodiment of the invention.
FIG. 30 is another perspective diagram of the accessory 100 in FIG. 29.
FIG. 31 is another perspective diagram of the accessory 100 in FIG. 29.
FIG. 32 is a side view of the accessory 100 in FIG. 29.

### DETAILED DESCRIPTION OF THE INVENTION

The making and using of the embodiments of the accessory for a handheld device are discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

Unless defined otherwise, all technical and scientific terms used herein have the same meaning as commonly understood by one of ordinary skill in the art to which this invention belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

In the following detailed description of the preferred embodiments, reference is made to the accompanying drawings, and in which specific embodiments of which the invention may be practiced are shown by way of illustration. In this regard, directional terminology, such as "top," "bottom," "left," "right," "front," "back," etc., is used with reference to the orientation of the figures being described. The components of the present invention can be positioned in a number of different orientations. As such, the directional terminology is used for the purposes of illustration and is in no way limiting.

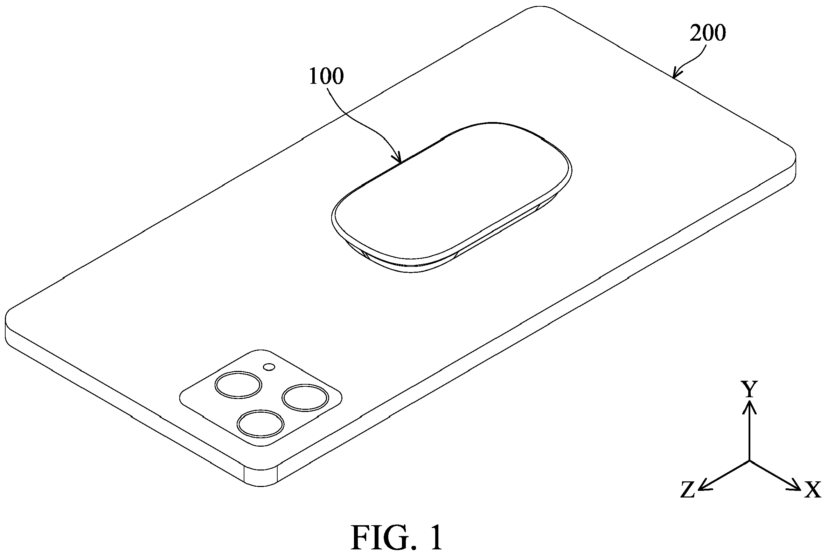

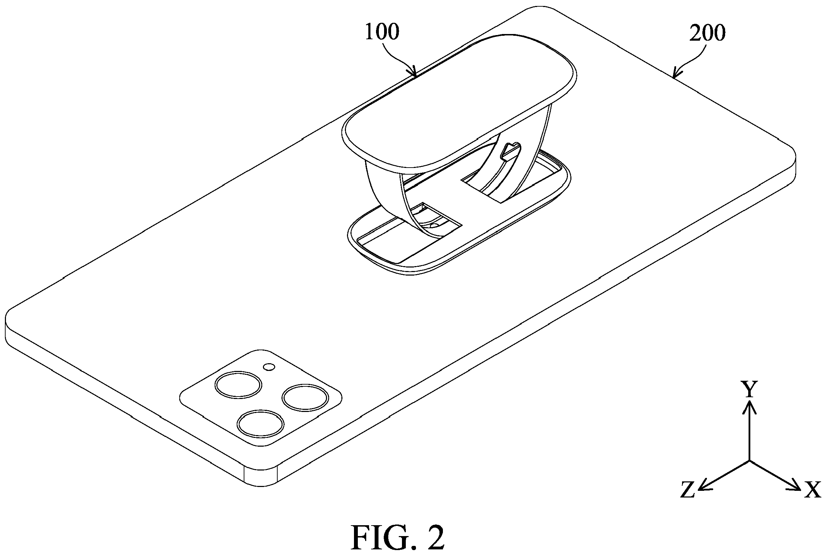

FIG. 1 is a perspective diagram of a handheld device 200 and its accessory 100 disposed on the handheld device 200, in accordance with an embodiment of the invention. FIG. 2 is a perspective diagram of the accessory 100 on the rear side of the handheld device 200 when in the open state.

Referring to FIGs. 1 and 2, the handheld device 200 in this embodiment may be a cell phone, and the accessory 100 is a retractable stand that is adhered to the rear side of the handheld device 200 and is switchable between a closed state (FIG. 1) and an open state (FIG. 2).

It should be noted that when the handheld device 200 is in normal use (e.g. audio communication), the accessory 100 can be retracted to save the space. However, when the handheld device 200 is used for watching video or video conference, the accessory 100 can be expended from the closed state (FIG. 1) to the open state (FIG. 2), and the handheld device 200 can stand on the table via the accessory 100, whereby the user can see the screen on the handheld device 200 clearly.

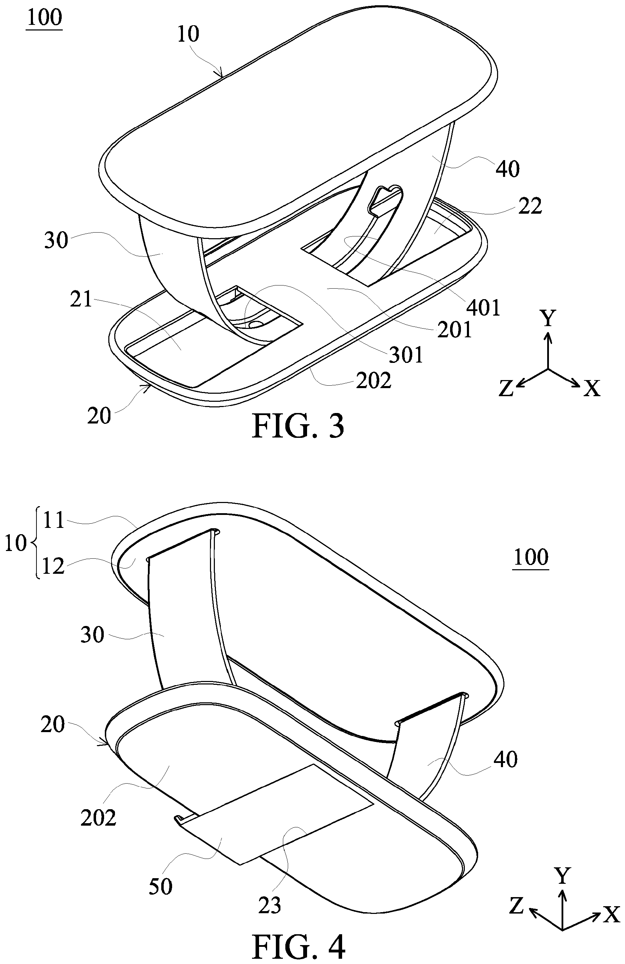

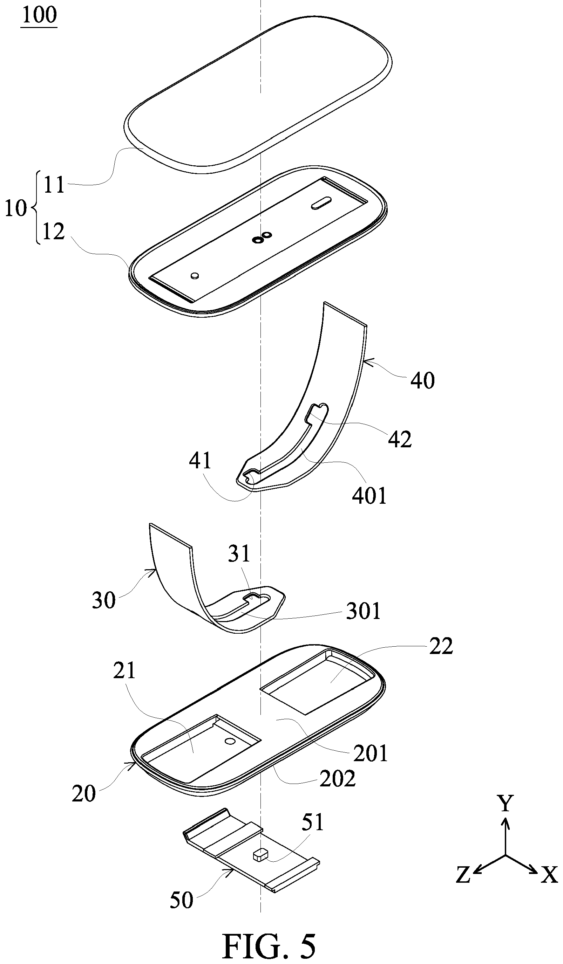

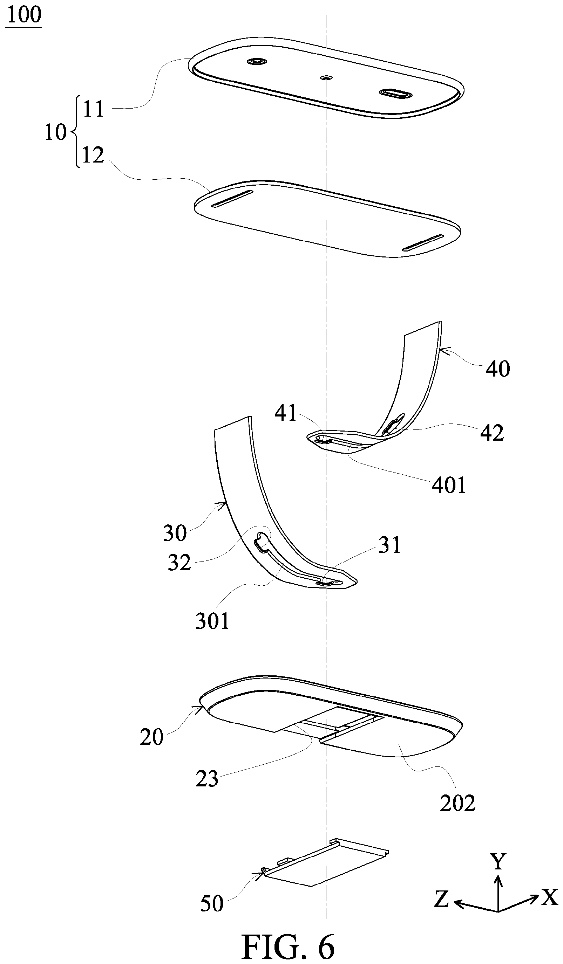

FIG. 3 is a perspective diagram of the accessory 100 in FIGs. 1 and 2 when in the open state. FIG. 4 is another perspective diagram of the accessory 100 in FIGs. 1 and 2 when in the open state. FIG. 5 is an exploded diagram of the accessory 100 in FIGs. 3 and 4. FIG. 6 is another exploded diagram of the accessory 100 in FIGs. 3 and 4.

Referring to FIGs. 3-6, the accessory 100 in this embodiment primarily comprises a first base 10, a second base 20, a first connecting member 30, a second connecting member 40, and a latch 50. The first base 10 has an upper cover 11 and a lower cover 12 connected to each other. The second base is provided with a first cavity 21 and a second cavity 22 that communicate with each other. One end of the first connecting member 30 is connected to the first base 10, and the other end of the first connecting member 30 is slidably received in the first cavity 21 of the second base 20.

Similarly, one end of the second connecting member 40 is connected to the first base 10, and the other end of the second connecting member 40 is slidably received in the second cavity 22 of the second base 20. In this embodiment, the first and second connecting members 30 and 40 are hinged to the opposite ends of the first base 10.

In some embodiments, the first and second connecting members 30 and 40 may also be hinged to the opposite ends of the second base 20. In some embodiments, the first and second connecting members 30 and 40 may be adhered to each other via a tape (not shown). The first and second bases 10 and 20 may extend through two openings at opposite ends of the lower cover 12, and the upper and lower covers 11 and 12 are subsequently mounted to each other and conceal the tape. It should be noted that the specific embodiments discussed are merely illustrative of specific ways to make and use the embodiments, and do not limit the scope of the disclosure.

The second base 20 has a baffle 201 and a bottom 202 that are connected to each other. The lower portions of the first and second connecting members 30 and 40 overlap and extend into the space between the baffle 201 and the bottom 202. Specifically, a protrusion 51 of the latch 50 is movably accommodated in the first and second rails 301 and 401 of the first and second connecting members 30 and 40.

For example, the first and second connecting members 30 and 40 may comprise flexible material (e.g. plastic). When the accessory 100 is switched between the closed state (FIG. 1) and the open state (FIG. 2), the first and second connecting members 30 and 40 can slide in the first and second cavities 21 and 22.

In this embodiment, the first connecting member 30 is provided with a first rail 301, a first recess 31 and a second recess 32. The first rail 301 communicates with the first and second recesses 31 and 32, and the first and second recesses 31 and 32 are located on the same side of the first rail 301. As shown in FIGs. 5 and 6, the first and second recesses 31 and 32 are located close to the ends of the first rail 301, and the protrusion 51 of the latch 50 can slide between the two ends (limit positions) of the first rail 301.

Similarly, the second connecting member 40 is provided with a second rail 401, a third recess 41 and a fourth recess 42. The second rail 401 communicates with the third and fourth recesses 41 and 42, and the third and fourth recesses 41 and 42 are located on the same side of the second rail 401. As shown in FIGs. 5 and 6, the third and fourth recesses 41 and 42 are located close to the ends of the second rail 401, and the protrusion 51 of the latch 50 can slide between the two ends (limit positions) of the second rail 401.

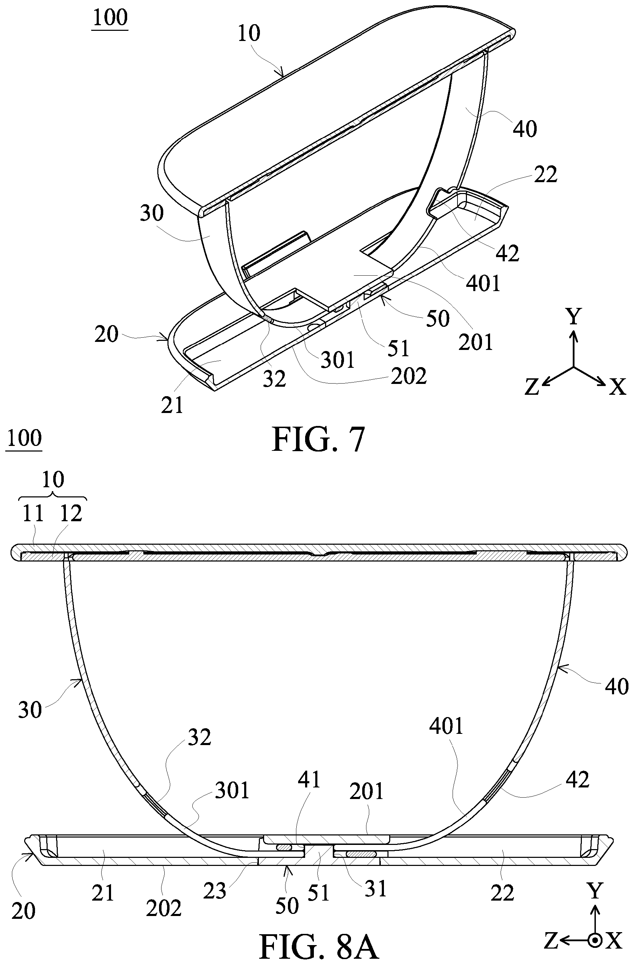

FIG. 7 is a cross-sectional view of the accessory 100 when in the open state. FIG. 8A is another cross-sectional view of the accessory 100 when in the open state.

Referring to FIGs. 1 to 8A, when the accessory 100 is in the open state, the first and second bases 10 and 20 are spaced apart from each other along the Y axis (first axis). Moreover, as shown in FIGs. 5 to 8A, the latch 50 is movably received in a slot 23 on the lower side of the bottom 202 and located corresponding to the baffle 201, wherein the protrusion 51 is formed on the latch 50 and extends toward the first base 10.

In this embodiment, the protrusion 51 penetrates the first and second connecting members 30 and 40, and it can slide along the first and second rails 301 and 401 of the first and second connecting members 30 and 40. Hence, the protrusion 51 can be selectively engaged in the first recess 31 or the second recess 32 of the first connecting member 30, and it can also be selectively engaged in the third recess 41 or the fourth recess 42 of the second connecting member 40.

On the contrary, the protrusion 51 can slide out of the first recess 31 or the second recess 32 to the first rail 301 of the first connecting member 30, and it can also slide out of the third recess 41 or the fourth recess 42 to the second rail 401 of the second connecting member 40, whereby the accessory 100 is switchable between the closed state (FIG. 1) and the open state (FIG. 2).

It should be noted that the latch 50 is movable relative to the second base 20 along the X axis (second axis) that is perpendicular to the Y axis (first axis). Moreover, the latch 50 protrudes from the second base 20 in a direction that is parallel to the X axis (second axis), whereby the user can push or pull the latch 50 with fingers easily.

When the accessory 100 is in the open state (FIGs. 3 and 4), the latch 50 can be moved relative to the second base 20 in the -X direction, whereby the protrusion 51 of the latch 50 is engaged in the first recess 31 of the first connecting member 30 and the third recess 41 of the second connecting member 40 at the same time. Hence, the first and second connecting members 30 and 40 are restricted from moving relative to the second base 20 to retain the accessory 100 in the open state, As a result, the handheld device 200 can stand on the table via the accessory 100, and the user can see the screen on the handheld device 200 clearly.

As described above, when the protrusion 51 of the latch 50 is engaged in the first recess 31 of the first connecting member 30 and the third recess 41 of the second connecting member 40, the first and second connecting members 30 and 40 are restricted from moving relative to the second base 20, thereby retaining the accessory 100 in the open state. After using the accessory 100, the user can push the latch 50 in the X direction, whereby the latch 50 moves relative to the second base 20, and the protrusion 51 is released from the first recess 31 and the third recess 41.

Subsequently, the user can press the first base 10 toward the second base 20 so that the protrusion 51 of the latch 50 slides along the first rail 301 of the first connecting member 30 and the second rail 401 of the second connecting member 40 to a position that is aligned with the second recess 32 of the first connecting member 30 and the fourth recess 42 of the second connecting member 40. The user then can pull the latch 50 relative to the second base 20 in the -X direction, whereby the protrusion 51 of the latch 50 is engaged in the second recess 32 of the first connecting member 30 and the fourth recess 42 of the second connecting member 40. Hence, the first and second connecting members 30 and 40 are restricted from moving relative to the second base 20, thereby retaining the accessory 100 in the closed state (FIG. 1) and reducing the volume of the accessory 100 for convenient storage.

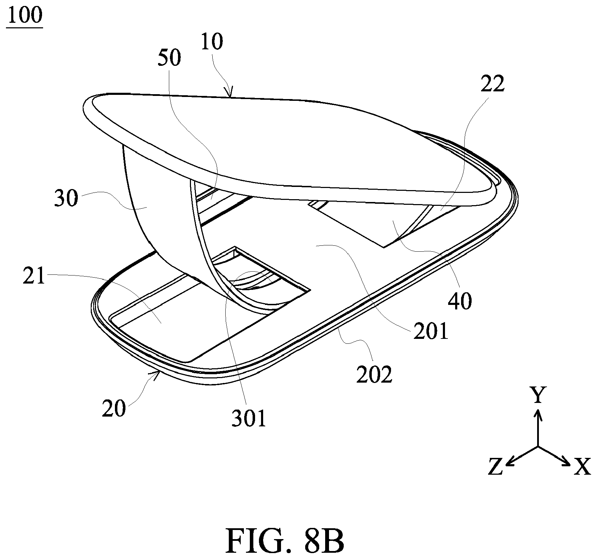

FIG. 8B is a perspective diagram of the accessory 100 when in an inclined state.

Referring to FIG. 8B, the user can push only one end of the longitudinal first base 10 toward the second base 20 to switch the accessory 100 to an inclined state, wherein the first connecting member 30 is exposed to a side of the accessory 100. In this state, the other end of the longitudinal first base 10 may be in contact with or close to the second base 20, and the first base 10 is angled relative to the second base 20. Additionally, the protrusion 51 of the latch 50 can be engaged in the first recess 31 of the first connecting member 30 and the fourth recess 42 of the second connecting member 40. As a result, the first and second connecting members 30 and 40 are restricted from moving relative to the second base 20, thereby retaining the accessory 100 in the inclined state (FIG. 8B), and facilitating flexible and convenient use of the accessory 100.

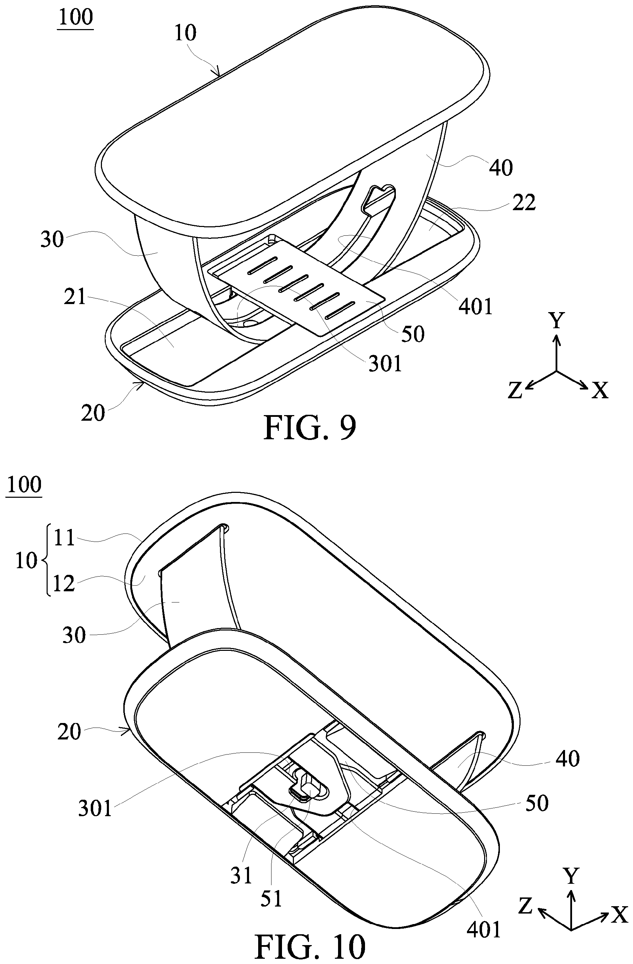

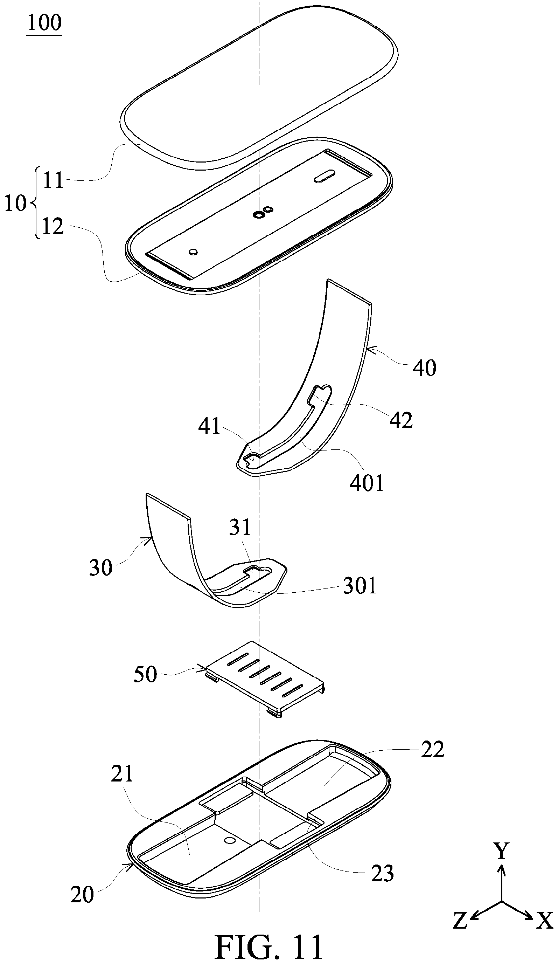

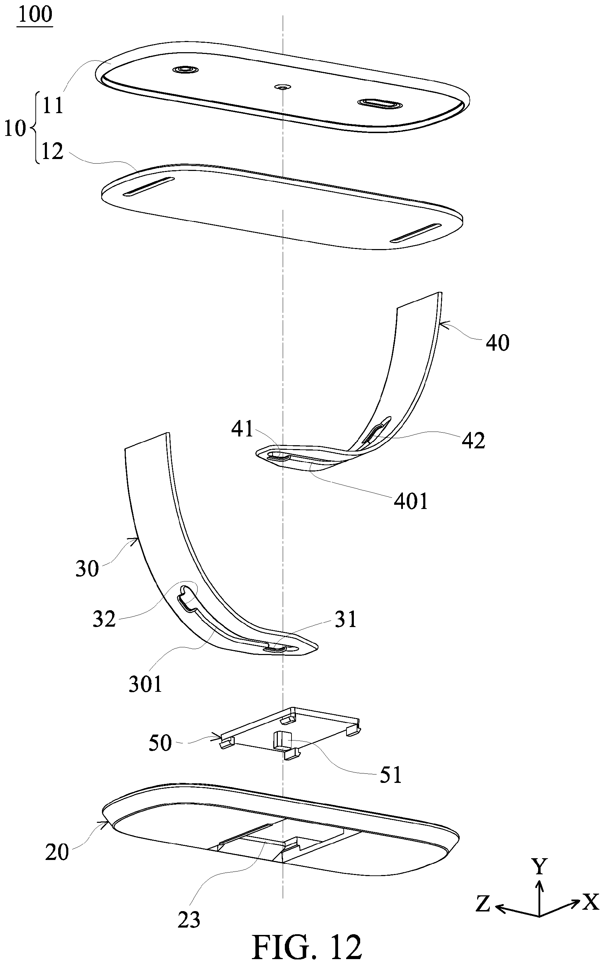

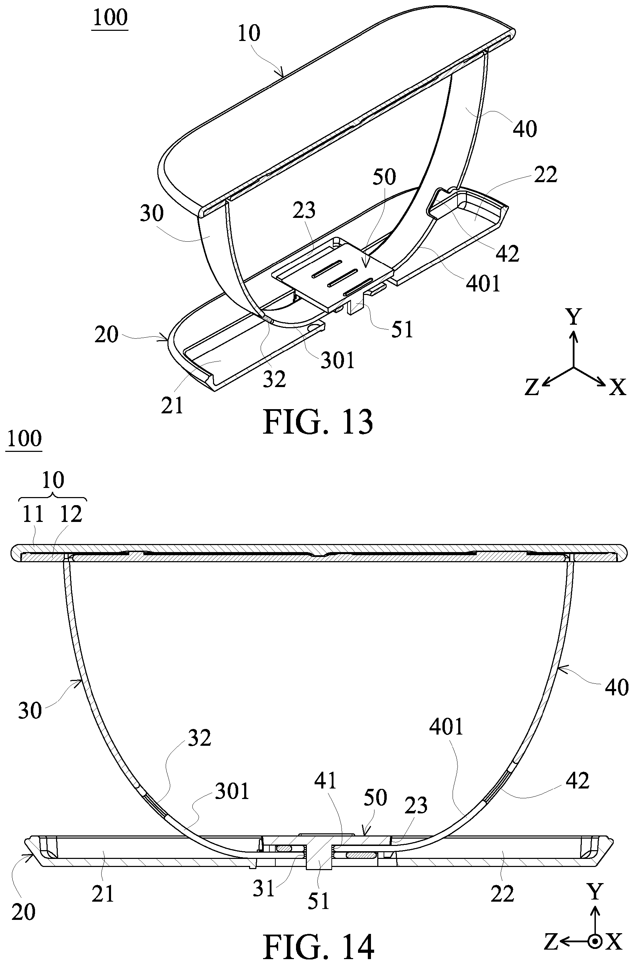

FIG. 9 is a perspective diagram of an accessory 100 when in the open state, in accordance with another embodiment of the invention. FIG. 10 is another perspective diagram of the accessory 100 in FIG. 9. FIG. 11 is an exploded diagram of the accessory 100 in FIGs. 9 and 10. FIG. 12 is another exploded diagram of the accessory 100 in FIGs. 9 and 10. FIG. 13 is a cross-sectional view of the accessory 100 in FIG. 9. FIG. 14 is another cross-sectional view of the accessory 100 in FIG. 9.

Referring to FIGs. 9-14, the accessory 100 in this embodiment is different from FIGs. 1-8B in that a slot 23 is formed on the top side of the second base 20 and located between the first and second cavities 21 and 22. Moreover, the latch 50 is received in the slot 23 and movable relative to the second base 20 along the X axis (second axis), wherein the latch 50 has a protrusion 51 extending toward the second base 20. The lower portions of the first and second connecting members 30 and 40 overlap and extend into the space between the baffle 201 and the bottom 202, and the protrusion 51 of the latch 50 extends into the first and second rails 301 and 401 of the first and second connecting members 30 and 40.

As shown in FIGs. 12-14, the protrusion 51 of the latch 50 is slidable along the first and second rails 301 and 401 and can be selectively engaged in the first recess 31 or the second recess 32 of the first connecting member 30. The protrusion 51 of the latch 50 can also be selectively engaged in the third recess 41 or the fourth recess 42 of the second connecting member 40, whereby the accessory 100 is switchable between the closed state and the open state.

In this embodiment, the latch 50 further has a rough surface facing the first base 10, whereby the user can move the latch 50 with fingers easily. In some embodiments, a plurality of ribs or bumps may be formed on the rough surface. In some embodiments, the rough surface may be formed by adhering one or several pads with high frictional coefficient to the latch 50.

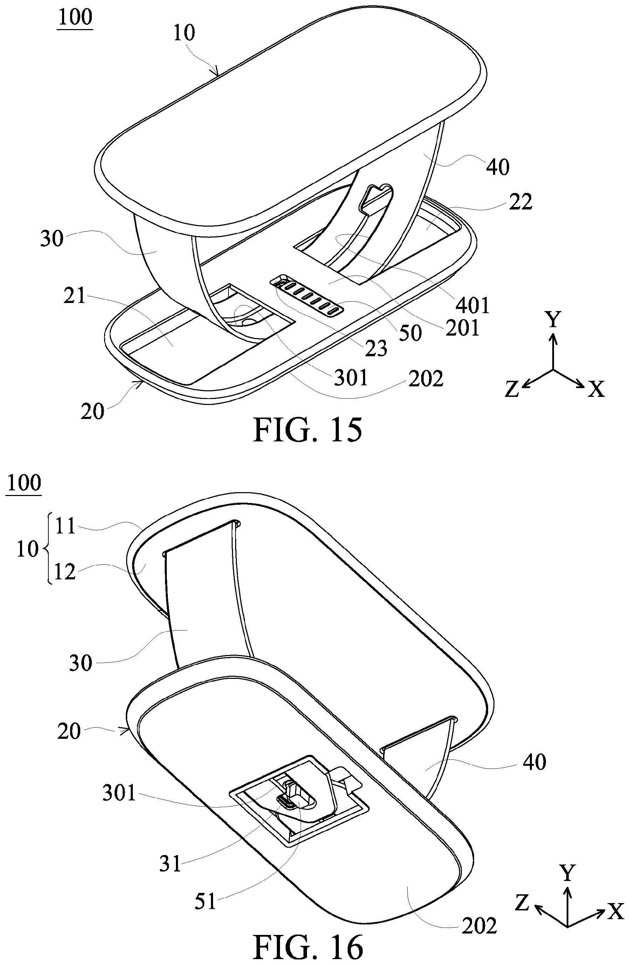

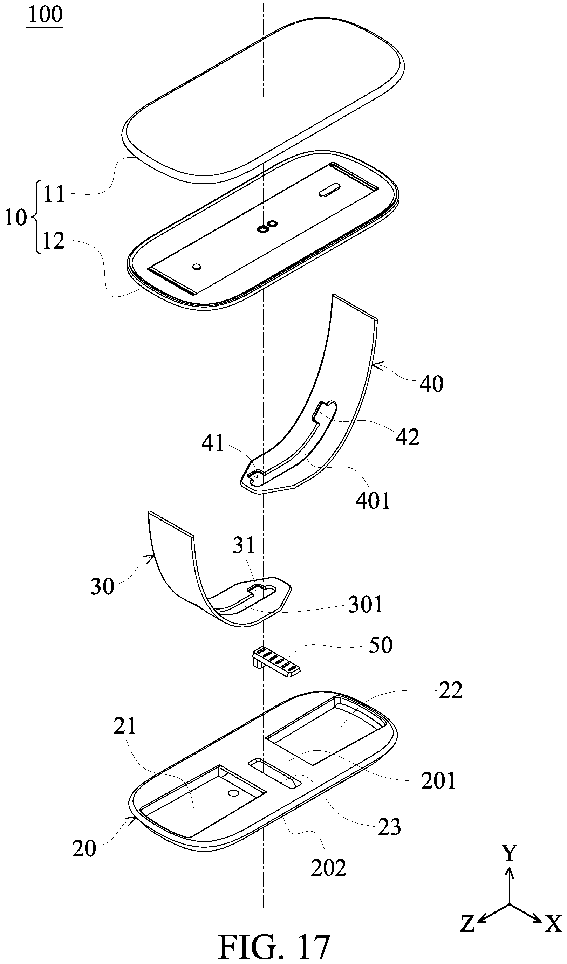

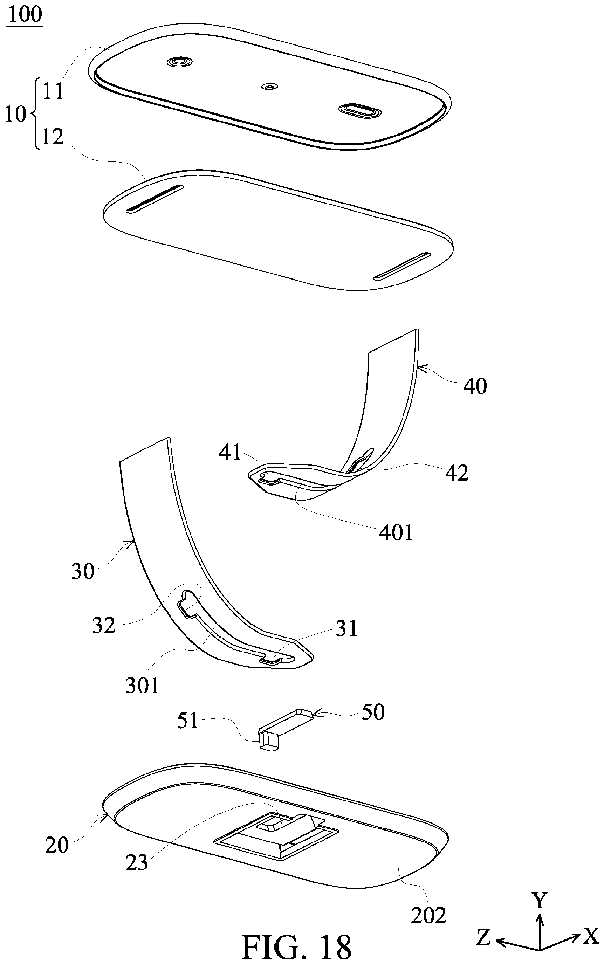

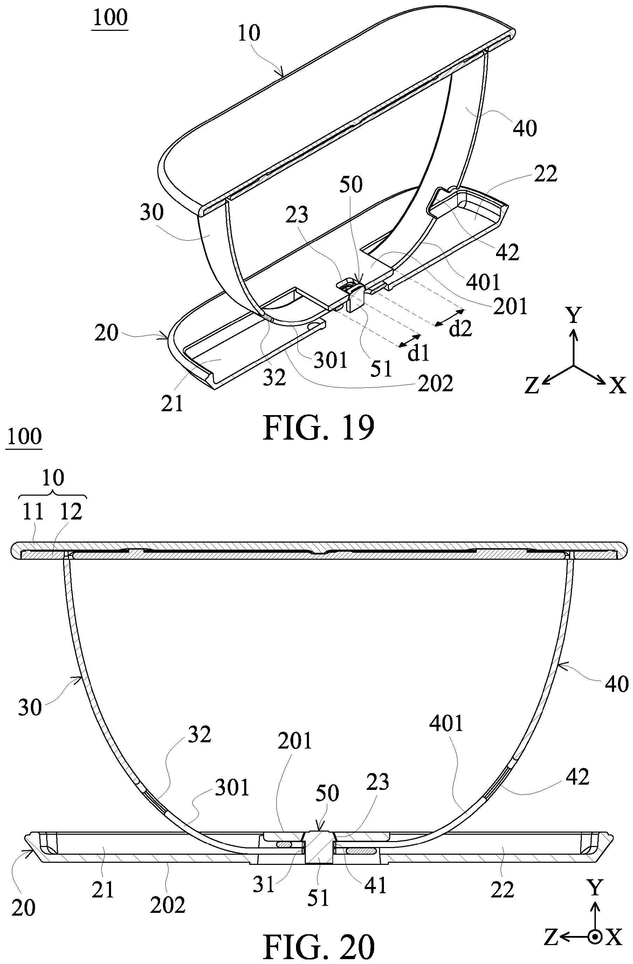

FIG. 15 is a perspective diagram of an accessory 100 when in the open state, in accordance with another embodiment of the invention. FIG. 16 is another perspective diagram of the accessory 100 in FIG. 15. FIG. 17 is an exploded diagram of the accessory 100 in FIGs. 15 and 16. FIG. 18 is another exploded diagram of the accessory 100 in FIGs. 15 and 16. FIG. 19 is a cross-sectional view of the accessory 100 in FIG. 15. FIG. 20 is another cross-sectional view of the accessory 100 in FIG. 15.

Referring to FIGs. 15-20, the accessory 100 in this embodiment is different from FIGs. 9-14 in that the slot 23 is formed on the baffle 201 that is located on the top side of the second base 20. The slot 23 is located between the first and second cavities 21 and 22, and the latch 50 is received in the slot 23 and movable relative to the second bas 20 along the X axis (second axis).

In this embodiment, the second base 20 is constructed by the baffle 201 and the bottom 202. The lower portions of the first and second connecting members 30 and 40 overlap and extend into the space between the baffle 201 and the bottom 202, and the protrusion 51 of the latch 50 is movably accommodated in the first and second rails 301 and 401 of the first and second connecting members 30 and 40.

As shown in FIGs. 18-20, the protrusion 51 of the latch 50 is slidable along the first and second rails 301 and 401 and can be selectively engaged in the first recess 31 or the second recess 32 of the first connecting member 30. The protrusion 51 of the latch 50 can also be selectively engaged in the third recess 41 or the fourth recess 42 of the second connecting member 40, whereby the accessory 100 is switchable between the closed state and the open state.

It should be noted that the latch 50 is movably received in the slot 23 and encompassed by the baffle 201. Here, the latch 50 and the first cavity 21 has a first distance d1 (FIG. 19), and the latch 50 and the second cavity 22 has a second distance d2 (FIG. 19), wherein the first distance d1 is equal to or less than the second distance d2.

The latch 50 further has a rough surface facing the first base 10, whereby the user can move the latch 50 with fingers easily. In some embodiments, a plurality of ribs or bumps may be formed on the rough surface. In some embodiments, the rough surface may be formed by adhering one or several pads with high frictional coefficient to the latch 50.

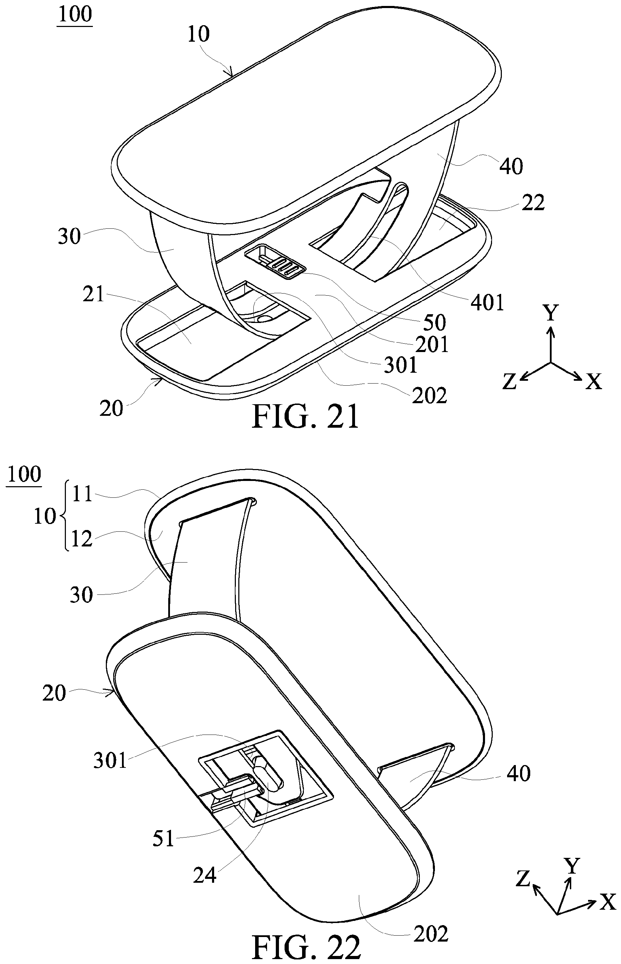

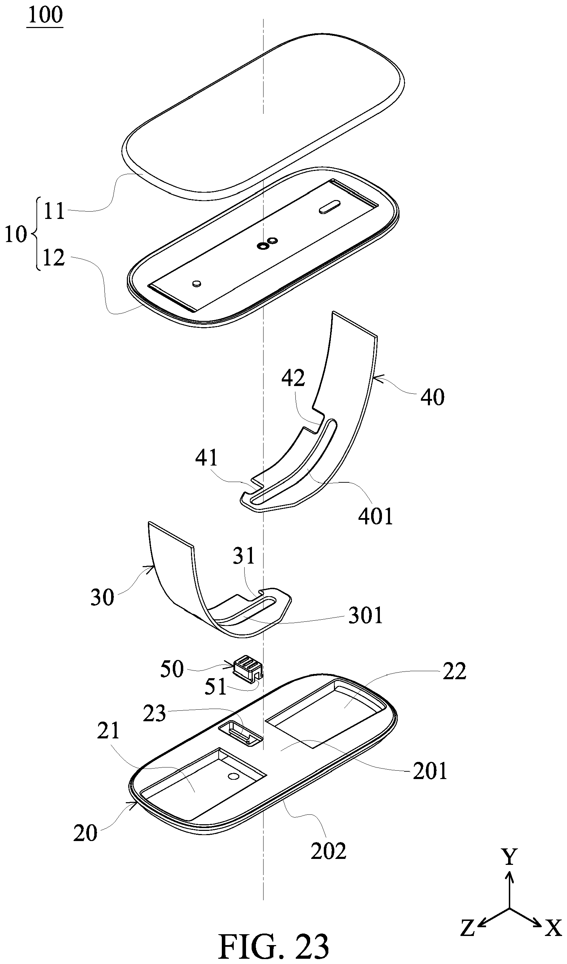

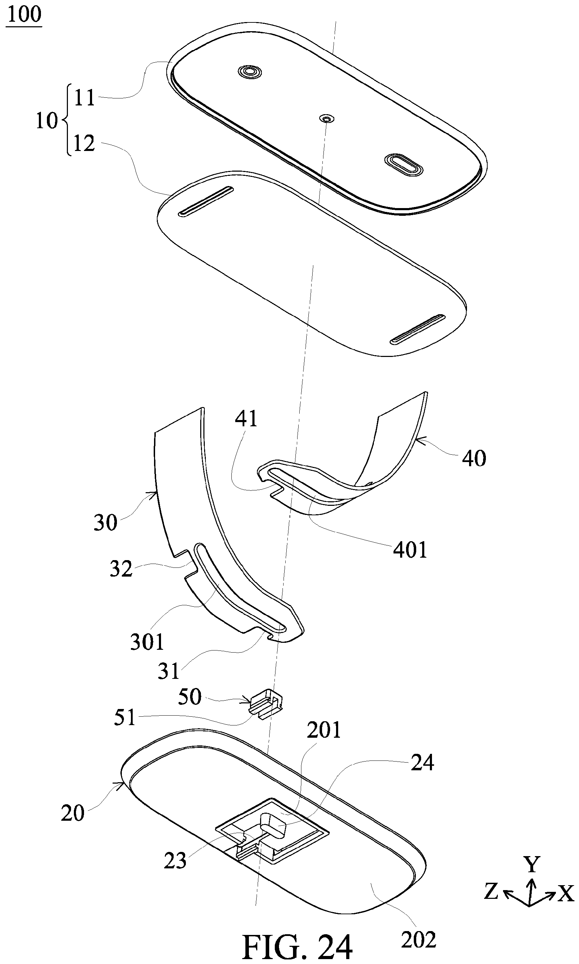

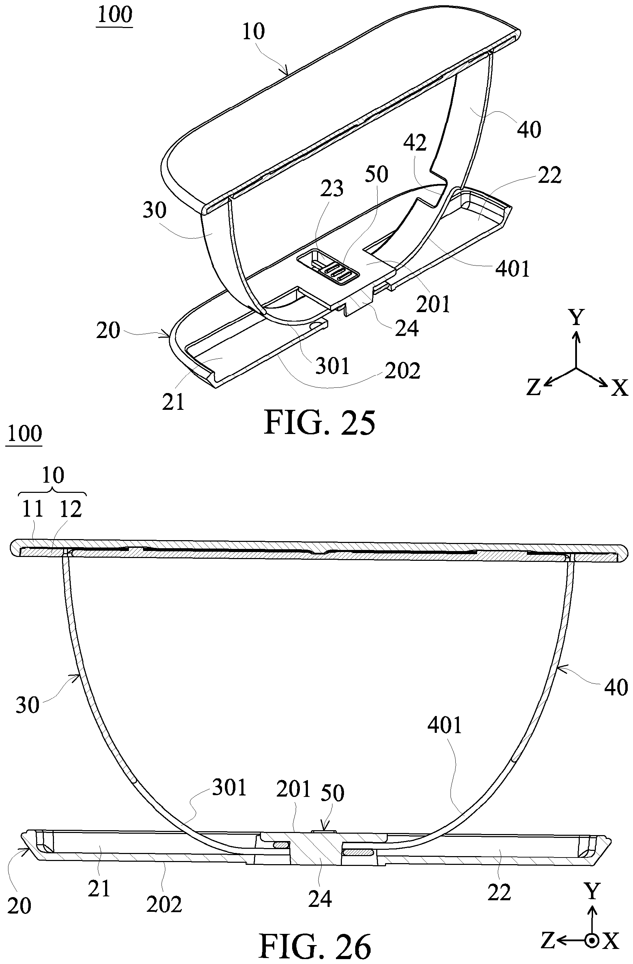

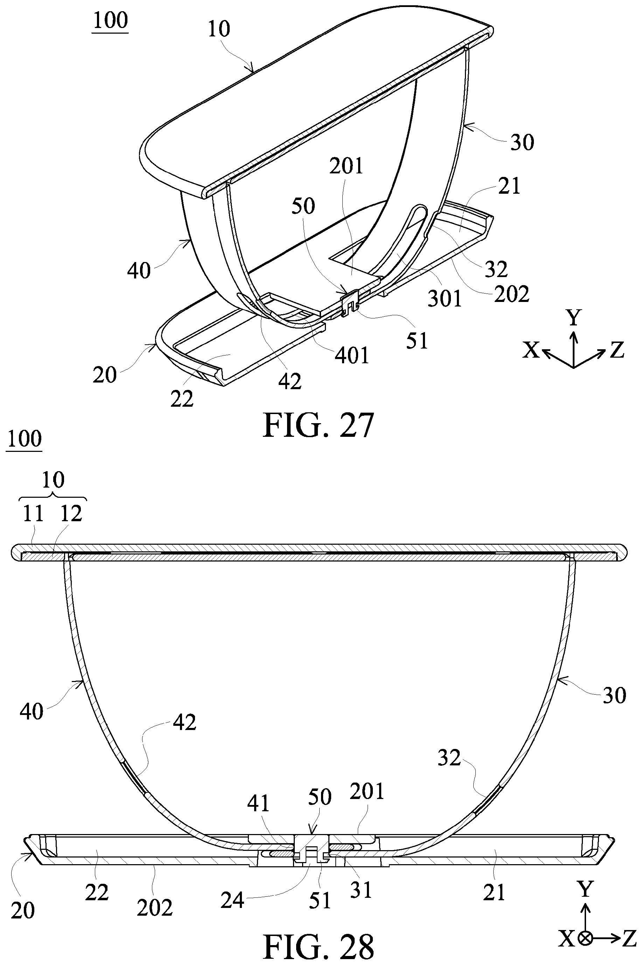

FIG. 21 is a perspective diagram of an accessory 100 when in the open state, in accordance with another embodiment of the invention. FIG. 22 is another perspective diagram of the accessory 100 in FIG. 21. FIG. 23 is an exploded diagram of the accessory 100 in FIGs. 21 and 22. FIG. 24 is another exploded diagram of the accessory 100 in FIGs. 21 and 22. FIG. 25 is a cross-sectional view of the accessory 100 in FIG. 21. FIG. 26 is another cross-sectional view of the accessory 100 in FIG. 21. FIG. 27 is a cross-sectional view showing the protrusion 51 of the latch 50 when engaged in the first recess 31 and the third recess 41. FIG. 28 is a cross-sectional view showing the protrusion 51 of the latch 50 when engaged in the second recess 32 and the fourth recess 42.

Referring to FIGs. 21-28, the accessory 100 in this embodiment is different from FIGs. 15-20 in that the first recess 31 and the second recess 32 are formed at the outer edge of the first connecting member 30, and the first rail 301 is spaced a part from the first and second recesses 31 and 32 along the X axis (second axis). Similarly, the third recess 41 or the fourth recess 42 are formed at the outer edge of the second connecting member 40, and the second rail 401 is spaced a part from the third and fourth recesses 41 and 42 along the X axis (second axis).

Specifically, as shown in FIGs. 24-26, a protrusion 24 is formed on the lower side of the baffle 201 and extends toward the bottom of the second base 20. The protrusion 24 extends through the first and second rails 301 and 401, and when the accessory 100 is switched between the closed state and the open state, the protrusion 24 can slide along the first and second rails 301 and 401.

It should be noted that the latch 50 is movably received in the slot 23 that is formed on the baffle 201. In this embodiment, the latch 50 can slide relative to the second base 20 along the X axis (second axis), and the protrusion 51 of the latch 50 can be selectively engaged in the first recess 31 or the second recess 32 at the outer edge of the first connecting member 30. The protrusion 51 of the latch 50 can also be selectively engaged in the third recess 41 or the fourth recess 42 at the outer edge of the second connecting member 40, whereby the accessory 100 is switchable between the closed state and the open state.

In this embodiment, the latch 50 has a rough surface facing the first base 10, whereby the user can move the latch 50 with fingers easily. In some embodiments, a plurality of ribs or bumps may be formed on the rough surface. In some embodiments, the rough surface may be formed by adhering one or several pads with high frictional coefficient to the latch 50.

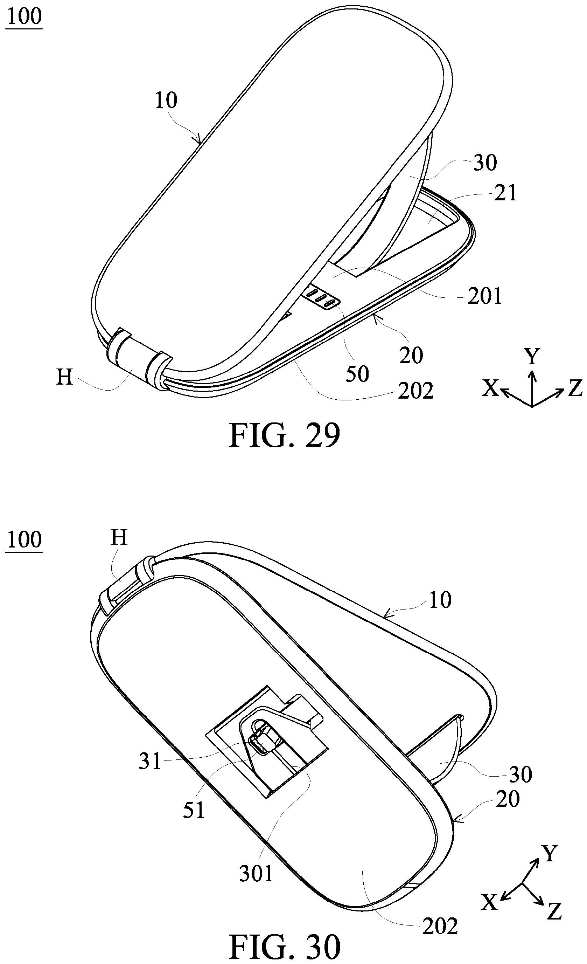

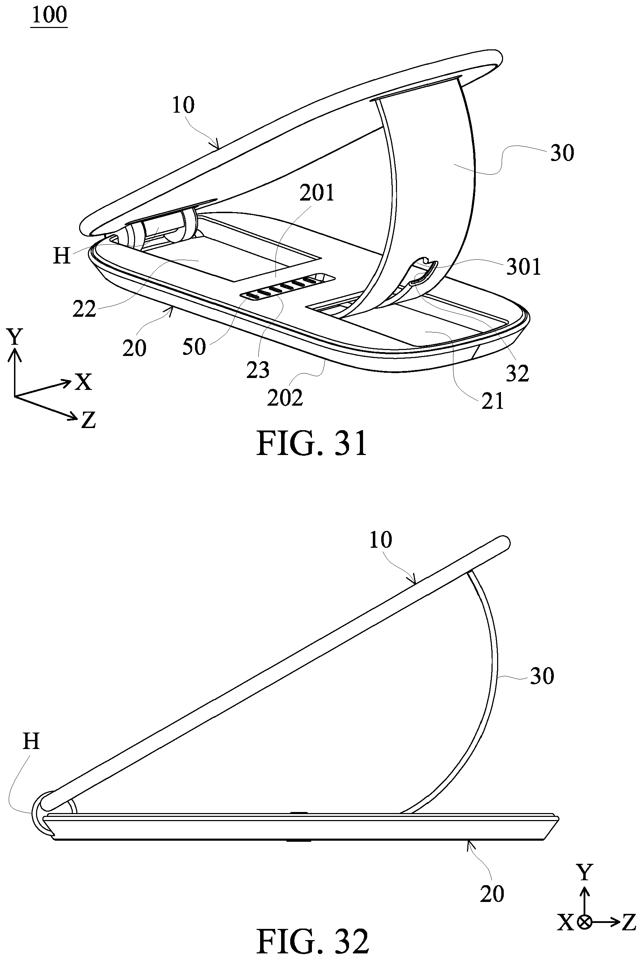

FIG. 29 is a perspective diagram of an accessory 100 when in the open state, in accordance with another embodiment of the invention. FIG. 30 is another perspective diagram of the accessory 100 in FIG. 29. FIG. 31 is another perspective diagram of the accessory 100 in FIG. 29. FIG. 32 is a side view of the accessory 100 in FIG. 29.

Referring to FIGs. 29-32, the accessory 100 in this embodiment is different from FIGs. 15-20 in that the second connecting member 40 is replaced by a hinge H, wherein the hinge H is disposed at the end of the longitudinal accessory 100 for pivotally connecting the first base 10 to the second base 20.

It should be noted that the second base 20 is constructed by the baffle 201 and the bottom 202. The first connecting member 30 extends into the space between the baffle 201 and the bottom 202, and the protrusion 51 of the latch 50 extends into the first rail 301 of the first connecting member 30.

As shown in FIGs. 29 and 31, the baffle 201 is located on the top side of the second base 20, and the latch 50 is movably received in the slot 23 that is formed on the baffle 201. In this embodiment, the latch 50 can slide relative to the second base 20 along the X axis (second axis).

When the accessory 100 is in the open state, the first base 10 is angled relative to the second base 20, and the user can move the latch 50 so that the protrusion 51 is engaged in the first recess 31 of the first connecting member 30. Therefore, the accessory 100 can be retained in the open state, and the handheld device 200 can stand on the table via the accessory 100, whereby the user can see the screen on the handheld device 200 clearly.

After using the accessory 100, the user can move the latch 50 back so that the protrusion 51 of the latch 50 slides out of the first recess 31 of the first connecting member 30. Subsequently, the user can press the first base 10 toward the second base 20 so that the protrusion 51 of the latch 50 slides along the first rail 301 to a position that is aligned with the second recess 32 of the first connecting member 30.

The user then can move the latch 50 relative to the second base 20, whereby the protrusion 51 of the latch 50 is engaged in the second recess 32 of the first connecting member 30. Hence, the first connecting member 30 can be restricted from moving relative to the second base 20, thereby retaining the accessory 100 in the closed state and reducing the volume of the accessory 100 for convenient storage.

In this embodiment, the latch 50 has a rough surface facing the first base 10, whereby the user can move the latch 50 with fingers easily. In some embodiments, a plurality of ribs or bumps may be formed on the rough surface. In some embodiments, the rough surface may be formed by adhering one or several pads with high frictional coefficient to the latch 50.

Although some embodiments of the present disclosure and their advantages have been described in detail, it should be understood that various changes, substitutions and alterations can be made herein without departing from the spirit and scope of the disclosure as defined by the appended claims. For example, it will be readily understood by those skilled in the art that many of the features, functions, processes, and materials described herein may be varied while remaining within the scope of the present disclosure. Moreover, the scope of the present application is not intended to be limited to the particular embodiments of the process, machine, manufacture, compositions of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps. Moreover, the scope of the appended claims should be accorded the broadest interpretation so as to encompass all such modifications and similar arrangements.

While the invention has been described by way of example and in terms of preferred embodiment, it should be understood that the invention is not limited thereto. On the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. An accessory for a handheld device, comprising:
a first base;
a second base;
a first connecting member, connected to the first base and slidably disposed on the second base, wherein the first connecting member is provided with a first recess;
a second connecting member, connected to the first base and slidably disposed on the second base; and
a latch, movably disposed on the second base, wherein when the accessory is in an open state, the first and second bases are spaced apart from each other along a first axis, and the latch can be detachably engaged in the first recess;
wherein the first connecting member is restricted from moving relative to the second base when the latch is engaged in the first recess.

2. The accessory for a handheld device as claimed in claim 1, wherein the first connecting member is further provided with a second recess, and when the accessory is switched from the open state to a closed state, the latch can be detachably engaged in the second recess.

3. The accessory for a handheld device as claimed in claim 2, wherein the latch is movable relative to the second base along a second axis that is perpendicular to the first axis.

4. The accessory for a handheld device as claimed in claim 3, wherein the first connecting member is further provided with a first rail that communicates with the first and second recesses, and the first and second recesses are located on the same side of the first rail, wherein when the accessory is switched between the open state and the closed state, the latch slides along the first rail and can be detachably engaged in the first recess or the second recess.

5. The accessory for a handheld device as claimed in claim 2, wherein the second connecting member is provided with a third recess, and when the accessory is in the open state, the latch can be detachably engaged in the third recess.

6. The accessory for a handheld device as claimed in claim 5, wherein the second connecting member is further provided with a fourth recess, and when the accessory is in the closed state, the latch can be detachably engaged in the fourth recess.

7. The accessory for a handheld device as claimed in claim 6, wherein the latch is movable relative to the second base along a second axis that is perpendicular to the first axis.

8. The accessory for a handheld device as claimed in claim 7, wherein the second connecting member is further provided with a second rail that communicates with the third and fourth recesses, and the third and fourth recesses are located on the same side of the second rail, wherein when the accessory is switched between the open state and the closed state, the latch slides along the second rail and can be detachably engaged in the third recess or the fourth recess.

9. The accessory for a handheld device as claimed in claim 8, wherein the latch is disposed on a bottom side of the second base, and the latch is provided with a protrusion extending toward the first base.

10. The accessory for a handheld device as claimed in claim 8, wherein the second base is provided with a first cavity and a second cavity that communicate with each other, and the latch is located between the first and second cavities.

11. The accessory for a handheld device as claimed in claim 10, wherein the second base has a baffle between the first and second cavities, and the latch is received in a slot disposed on the baffle.

12. The accessory for a handheld device as claimed in claim 3, wherein the first and second recesses are formed at an edge of the first connecting member.

13. The accessory for a handheld device as claimed in claim 12, wherein the second base is further provided with a protrusion, and the first connecting member is further provided with a first rail, wherein when the accessory is switched from the open state to the closed state, the protrusion slides along the first rail.

14. The accessory for a handheld device as claimed in claim 1, wherein the first and second connecting members both comprise flexible material.

15. An accessory for a handheld device, comprising:
a first base;
a second base, pivotally connected to the first base;
a first connecting member, connected to the first base and slidably disposed on the second base, wherein the first connecting member is provided with a first recess; and
a latch, movably disposed on the second base, wherein when the accessory is in an open state, the first base is angled relative to the second base, and the latch can be detachably engaged in the first recess;
wherein the first connecting member is restricted from moving relative to the second base when the latch is engaged in the first recess.

## Amended claims

### Amended claims in accordance with Rule 137(2) EPC.

1. An accessory (100) for a handheld device (200), comprising:
a first base (10);
a second base (20);
a first connecting member (30), connected to the first base (10) and slidably disposed on the second base (20), wherein the first connecting member (30) is provided with a first recess (31);
a second connecting member (40), connected to the first base (10) and slidably disposed on the second base (20);
**characterised in that** the accessory further comprises:
a latch (50), movably disposed on the second base (20), wherein when the accessory (100) is in an open state, the first and second bases are spaced apart from each other along a first axis, and the latch (50) can be detachably engaged in the first recess (31);
wherein the first connecting member (30) is restricted from moving relative to the second base (20) when the latch (50) is engaged in the first recess (31).

2. The accessory (100) for a handheld device (200) as claimed in claim 1, wherein the first connecting member (30) is further provided with a second recess (32), and when the accessory (100) is switched from the open state to a closed state, the latch (50) can be detachably engaged in the second recess (32).

3. The accessory (100) for a handheld device (200) as claimed in claim 2, wherein the latch (50) is movable relative to the second base (20) along a second axis that is perpendicular to the first axis.

4. The accessory (100) for a handheld device (200) as claimed in claim 3, wherein the first connecting member (30) is further provided with a first rail (301) that communicates with the first and second recesses, and the first and second recesses are located on the same side of the first rail (301), wherein when the accessory (100) is switched between the open state and the closed state, the latch (50) slides along the first rail (301) and can be detachably engaged in the first recess (31) or the second recess (32).

5. The accessory (100) for a handheld device (200) as claimed in claim 2, wherein the second connecting member (40) is provided with a third recess (41), and when the accessory (100) is in the open state, the latch (50) can be detachably engaged in the third recess (41).

6. The accessory (100) for a handheld device (200) as claimed in claim 5, wherein the second connecting member (40) is further provided with a fourth recess (42), and when the accessory (100) is in the closed state, the latch (50) can be detachably engaged in the fourth recess (42).

7. The accessory (100) for a handheld device (200) as claimed in claim 6, wherein the latch (50) is movable relative to the second base (20) along a second axis that is perpendicular to the first axis.

8. The accessory (100) for a handheld device (200) as claimed in claim 7, wherein the second connecting member (40) is further provided with a second rail that communicates with the third and fourth recesses, and the third and fourth recesses are located on the same side of the second rail, wherein when the accessory (100) is switched between the open state and the closed state, the latch (50) slides along the second rail and can be detachably engaged in the third recess (41) or the fourth recess (42).

9. The accessory (100) for a handheld device (200) as claimed in claim 8, wherein the latch (50) is disposed on a bottom (202) side of the second base (20), and the latch (50) is provided with a protrusion (24, 51) extending toward the first base (10).

10. The accessory (100) for a handheld device (200) as claimed in claim 8, wherein the second base (20) is provided with a first cavity (21) and a second cavity (22) that communicate with each other, and the latch (50) is located between the first and second cavities.

11. The accessory (100) for a handheld device (200) as claimed in claim 10, wherein the second base (20) has a baffle (201) between the first and second cavities, and the latch (50) is received in a slot (23) disposed on the baffle (201).

12. The accessory (100) for a handheld device (200) as claimed in claim 3, wherein the first and second recesses are formed at an edge of the first connecting member (30).

13. The accessory (100) for a handheld device (200) as claimed in claim 12, wherein the second base (20) is further provided with a protrusion (24, 51), and the first connecting member (30) is further provided with a first rail (301), wherein when the accessory (100) is switched from the open state to the closed state, the protrusion (24, 51) slides along the first rail (301).

14. The accessory (100) for a handheld device (200) as claimed in claim 1, wherein the first and second connecting members both comprise flexible material.
